(19) Europäisches Patentamt / European Patent Office / Office européen des brevets

(11) **EP 4 300 838 A1**

(12) **EUROPEAN PATENT APPLICATION**

(43) Date of publication:
**03.01.2024 Bulletin 2024/01**

(21) Application number: **22305947.8**

(22) Date of filing: **29.06.2022**

(51) International Patent Classification (IPC):
**H04B 7/026** (2017.01)    **H04B 7/06** (2006.01)
**H04B 7/08** (2006.01)

(52) Cooperative Patent Classification (CPC):
**H04B 7/026; H04B 7/0695; H04B 7/088**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Fondation B-COM**
**35510 Cesson-Sévigné (FR)**

(72) Inventor: **HASKOU, Abdullah**
**35250 SAINT-AUBIN D'AUBIGNE (FR)**

(74) Representative: **Cabinet Beau de Loménie**
**158, rue de l'Université**
**75340 Paris Cedex 07 (FR)**

(54) **METHOD AND DEVICE FOR CONFIGURING A COMMUNICATION DEVICE FOR DATA TRANSMISSION BETWEEN AN EMITTER AND A RECEIVER**

(57) The invention concerns a method for configuring a communication device for data transmission between an emitter and a receiver through said communication device, the device comprising elements, the method comprising, at the communication device:

(i) transmitting a first radio signal as K first beams through K different directions, wherein, for a first beam, elements of the device are configured according to a configuration data of a first plurality of configuration data for transmitting the radio signal through one of the K directions;

(ii) obtaining data representing a configuration data of the first plurality of configuration data, said configuration data being based on a first quality criterion;

(iii) transmitting a second radio signal as N second beams through N different directions,

wherein, for a second beam, elements are configured according to a configuration data of a second plurality of configuration data for transmitting the radio signal through one of the N directions,

wherein the directions of the second beams are comprised within the direction of the first beam associated to the obtained data; and,

(iv) applying a configuration data of the second plurality of configuration data, based on a second quality criterion.

**FIG.2**

## Description

Field of the disclosure

The present invention generally relates to the field of telecommunications, and especially to wireless telecommunications implemented by radio networks such as mobile telecommunication networks (ex. 3G, 4G, 5G, etc.), Wi-Fi (Wireless Fidelity), etc. It relates more specifically to a method for configuring a communication device for data transmission between an emitter and a receiver through said communication device, a communication device, a system comprising the communication device and an emitter, and a system comprising the communication device and a receiver.

Description of the Related Art

The previous generations of radio networks were considering the wireless propagation channel as an uncontrollable factor. However, recently, Reconfigurable Intelligent Surfaces (RISs) have received significant attention for their potential to enhance the capacity and coverage of radio networks by smartly reconfiguring the wireless propagation channel.

A RIS may be defined as a relay that receives an incident signal from an emitter and then reradiates it in a specific direction. It is commonly considered as a full-duplex relay that can both receive and re-transmit signals.

A RIS comprises a large number of reflecting elements that can dynamically tune the phase and/or amplitude of the incident signal to improve the performance of radio networks. In particular, the reflected signals can be combined constructively to improve the strength of the signal received by a receiver. By deploying RISs in a radio network and intelligently reconfiguring their reflections, the wireless propagation channels between the emitter and receiver can be dynamically reconfigured to achieve the desired distributions and gains. This enables the radio network, to some extent, to be controlled, resulting in an improvement in term of reliability, capacity and addressing the issue of wireless channel interference and fading.

A RIS is commonly configured with a codebook-based beamforming technique. This beamforming technique comprises a configuration stage, also known as "beam sweeping" during which the emitter:

-    transmits a plurality of narrow beams in a plurality of predetermined directions;

-    identifies the strongest beam that yields the best receiver's performances; and then,

-    establishes a communication link by using the configuration used to generate the strongest beam.

However, this configuration requires a long time, has an important overhead and is not energy-efficient since quality of the wireless propagation channel is estimated after each transmission of the beams.

There is thus room for improvement in the fields of wireless telecommunications using relays.

Summary of the disclosure

To this end, the present invention first provides a method for configuring a communication device for data transmission between an emitter and a receiver through said communication device, the device comprising elements, the method comprising, at the communication device:

-    transmitting a first radio signal as K first beams through K different directions, wherein, for a first (wide) beam, elements of the device are configured according to a configuration data of a first plurality of configuration data for transmitting the radio signal through one of the K directions;

-    obtaining data representing a configuration data of the first plurality of configuration data, said configuration data being based on a first quality criterion;

-    transmitting a second radio signal as N second (narrow) beams through N different directions,

        wherein, for a second beam, elements are configured according to a configuration data of a second plurality of configuration data for transmitting the radio signal through one of the N directions,

        wherein the directions of the second beams are comprised within the direction of the first beam associated to the obtained data; and,

-    applying a configuration data of the second plurality of configuration data, based on a second quality criterion.

This method offers the advantage of reducing the number of tested configuration data during beam sweeping, while having exactly the same performances in term of quality and performance. As a consequence, this method is fast and energy-efficient. Furthermore, this method reduces the overhead required for choosing the optimal configuration data.

In some implementations, the configuration data comprise data for adjusting a phase shift of an element between a received signal and a transmitted signal, so that the transmitted signal is redirected in a predetermined direction.

In some implementations, the method further comprises:

- receiving, by said device and previously to step (i), first data transmitted by the emitter, the transmission of the first radio signal being based on said first data ;
- receiving, by the emitter and following step (i), first quality data transmitted by the receiver through the device, the first quality data representing quality of the first radio signal received by the receiver;
- selecting, by the emitter, a configuration data among the first plurality of configuration data, based on the received first quality data; and,
- step (ii) comprises receiving, from the emitter and by the device, data identifying the selected configuration data.

In some implementations, K first data are transmitted by the emitter, and the K first data are equal to each other. This feature allows using a receiver configured to handle first data which are equal to each other, for a same user.

In some implementations, the method further comprises:

- receiving, by said device and previously to step (iii), second data transmitted by the emitter, the transmission of the second radio signal being based on said second data;

- receiving, by the emitter and following step (iii), second quality data transmitted by the receiver through the device, the second quality data representing quality of said second radio signal received by the receiver;

- selecting, by the emitter, a configuration data among the second plurality of configuration data, based on the received second quality data; and,

- transmitting, by the emitter and previously to step (iv), data identifying said selected configuration data to the device.

In some implementations, N second data are transmitted, and the N second data are equal to each other.

In some implementations, the method further comprises, following step (iv):

- determining, by the emitter or the receiver, that a third quality criterion is inferior to a predetermined threshold when exchanging data between the emitter and the receiver through the device;

- transmitting the second radio signal as N' second beams through N' different directions,

    wherein, for a second beam, elements are configured according to a configuration data of the second plurality of configuration data for transmitting the radio signal through one of the N' directions,

    wherein the directions of the N' second beams are comprised within the direction of a beam adjacent to said first beam associated to the obtained data; and,

- applying a configuration data of the second plurality of configuration data, based on a fourth quality criterion.

Considering second beams comprised within a first beam which is adjacent to the first beam previously selected is based on the assumption that the receiver will probability move from one angular sector to an adjacent angular sector, and this features offers the advantage of further limiting the number of tests to determine an optimal configuration data.

In some implementations, the method further comprises, following step (iv):

- determining, by the emitter or the receiver, that a third quality criterion is inferior to a predetermined threshold when exchanging data between the emitter and the receiver through the device;

- transmitting the first radio signal as K' first beams through K' different directions,

    wherein, for a first beam, elements are configured according to a configuration data of the first plurality of configuration data for transmitting the radio signal through one of the K' directions,

    wherein the directions of the K' first beams are comprised within the direction of a beam adjacent to said first beam associated to the obtained data; and,

- applying a configuration data of the first plurality of configuration data, based on a fourth quality criterion.

In some implementations, the method further comprises determining K so that K corresponds to a preferred number of first beams according to a criterion for optimizing a number of iterations.

That implementation offers the advantage of minimizing the number of tested configuration data.

In some implementations, K corresponds to a preferred number of first beams, and $K = arr(\sqrt{M})$, with arr(.) a rounding function and M a number of second beams necessary for covering the widest space allowed by the communication device.

In some implementations, the method further comprises:

- transmitting, by the device, a third radio signal as $P_i$ third beams through P different directions,

    wherein, for a third beam, elements are configured according to a configuration data of a third plurality of configuration data for transmitting the radio signal through one of the P directions,

    wherein the directions of the third beams are comprised within the direction of a second beam transmitted according to the configuration data applied at step (iv); and,

- applying, by the device, a configuration of the third plurality of configuration data, based on a fifth quality criterion.

In some implementations, the method further comprises:

- determining a preferred number $i$ of stages according to a criterion for optimizing a number of iterations ;

- re-iterating i-times the transmitting and applying steps previously disclosed.

In some implementations, the determining comprises computing $i = arr(ln(M))$, with M a number of second (narrow) beams necessary for covering the widest space allowed by the communication device, and arr(.) a rounding function.

In some implementations, the quality criterion are one among the following criteria:

- a decoding error rate,

- a signal-to-noise ratio,

- a signal-to-interference-and-noise ratio,

- a bit-error-rate.

In some implementations, the configuration data of the plurality are predetermined.

In some implementations, the configuration data of the plurality are stored within a memory accessible by the device.

In some implementations, the emitter is a user equipment, the receiver is a base station, and the communication device is a Reconfigurable Intelligent Surface (RIS).

In some implementations, the emitter and/or the receiver are compatible with the Standard ETSI TS 123 501.

In some implementations, data transmission is compatible with the Standard ETSI TS 123 003.

In some implementations, the emitter is Wi-Fi Access Point (AP), and the receiver is a Wi-Fi equipment.

According to a second aspect, the present invention concerns a communication device comprising:

- elements;

- at least one processor; and

- a memory containing a program implementing a method for configuring said communication device for data transmission between an emitter and a receiver through said communication device, the method comprising:

    - (i) transmitting a first radio signal as K first beams through K different directions, wherein, for a first beam, elements are configured according to a configuration data of a first plurality of configuration data for transmitting the radio signal through one of the K directions;

    - (ii) obtaining data representing a configuration data of the first plurality of configuration data, said configuration data being based on a first quality criterion;

    - (iii) transmitting a second radio signal as N second beams through N different directions,

        wherein, for a second beam, elements are configured according to a configuration data of a second plurality of configuration data for transmitting the radio signal through one of the N directions,

        wherein the directions of the second beams are comprised within the direction of the first beam associated to the obtained data; and,

    - (iv) applying a configuration data of the second plurality of configuration data, based on a second quality criterion.

In some implementations, said communication device is a relay configured to receive a signal and to beamform it in a specific direction.

In some implementations, said communication device is a Reconfigurable Intelligent Surface (RIS).

According to a third aspect, the present invention concerns a system comprising the communication device of the invention, the system further comprising an emitter comprising at least one processor; and a memory containing a program implementing a method for configuring a communication device for data transmission between said emitter and a receiver through said communication device, the method comprising:

- transmitting first data to the communication device;
- receiving first quality data transmitted by the receiver through the communication device, the first quality data representing quality of the first radio signal received by the receiver;

- selecting a configuration data among a first plurality of configuration data, based on the received first quality data;
- transmitting data identifying the selected configuration data to the communication device;
- transmitting second data to the communication device;
- receiving second quality data transmitted by the receiver through the communication device, the second quality data representing quality of the second radio signal received by the receiver;
- selecting a configuration data among a second plurality of configuration data, based on the received second quality data; and,
- transmitting, to the communication device, data identifying said selected configuration data.

According to a fourth aspect, the present invention concerns a system comprising the communication device of the invention, the system further comprising a receiver comprising at least one processor; and a memory containing a program implementing a method for configuring said communication device for data transmission between said emitter and said receiver through said communication device, the method comprising:

- receiving the first radio signal transmitted by the communication device as K first beams through K different directions;

- determining first quality data of the received first radio signal;

- transmitting first quality data to the emitter and through the communication device;

- receiving the second radio signal transmitted as N second beams through N different directions;

- determining second quality data of the received second radio signal; and,

- transmitting second quality data to the emitter and through the communication device.

Embodiments of the present invention also extend to programs which, when run on a computer or processor, cause the computer or processor to carry out the methods described above or which, when loaded into a programmable device, cause that device to become the device described above. The program may be provided by itself, or carried by a carrier medium. The carrier medium may be a storage or recording medium, or it may be a transmission medium such as a signal. A program embodying the present invention may be transitory or non-transitory.

Brief description of the drawings

Figure 1 depicts, for illustrative purposes, transmission of signals between an emitter and two receivers of a wireless communication system in which the invention is applicable,

Figure 2 illustrates the principle of the invention with a first example of transmission of a radio signal as first and second beams,

Figure 3A illustrates a particular implementation of an emitter according to the invention,

Figure 3B illustrates a particular implementation of a communication device according to the invention,

Figure 3C illustrates a particular implementation of a receiver according to the invention,

Figure 4A illustrates an example of the hardware architecture of said emitter,

Figure 4B illustrates an example of the hardware architecture of said communication device,

Figure 4C illustrates an example of the hardware architecture of said receiver,

Figure 5 is a flowchart of the main steps of a method for configuring the communication device according to the invention,

Figure 6 illustrates the principle of the invention with a second example of transmission of a radio signal as first and second beams,

Figure 7 illustrates the principle of the invention with a third example of transmission of a radio signal as first, second and third beams,

Figure 8A illustrates an evolution of the number L of tested beams as a function of a number N of first (wide) beams in single and multi-level cases,

Figure 8B is a plot of the number L of tested beams as a function of a number N of first (wide) beams in single and multi-level cases,

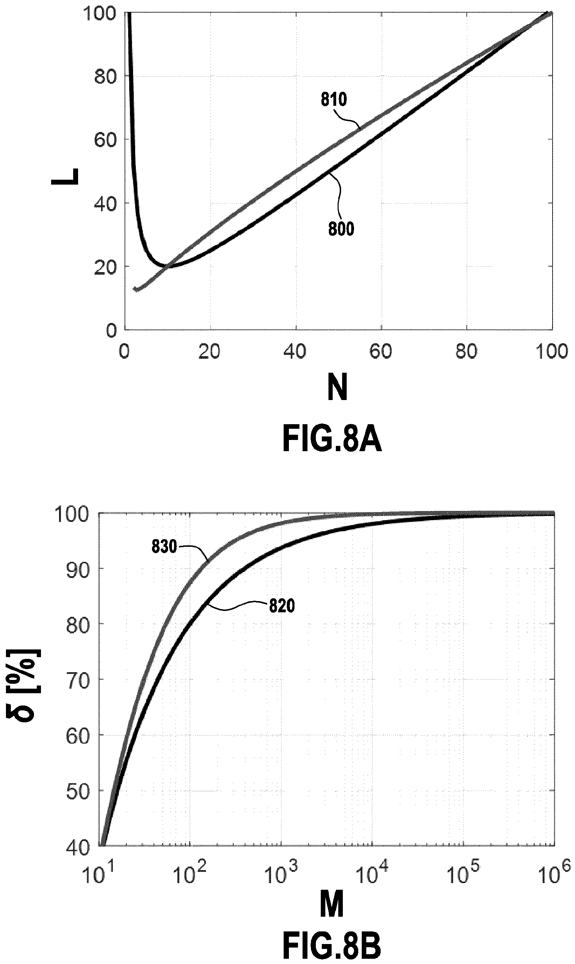

Figure 8B is a plot of the reduction factor value as a function of a number M of second (narrow) beams, in single and multi-level cases,

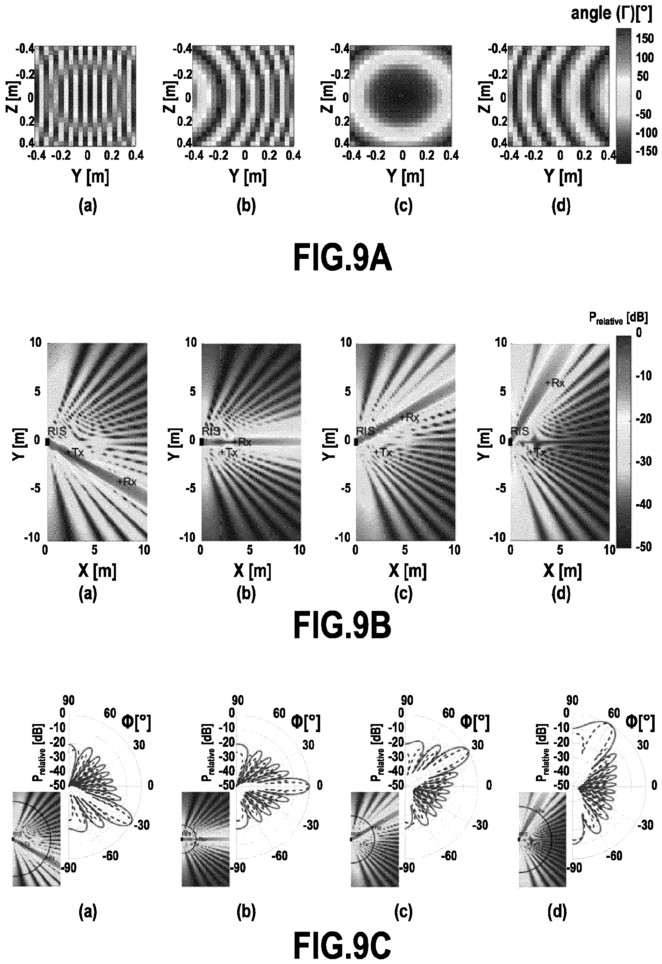

Figure 9A illustrates the calculated required phase of elements of a RIS, for four different cases,

Figure 9B illustrates the relative received power in the $(O, \vec{i}, \vec{j},)$ plane, for the four cases,

Figure 9C illustrates the beamwidth calculation method and the obtained beams in the $(O, \vec{i}, \vec{j},)$ plane, for the four cases,

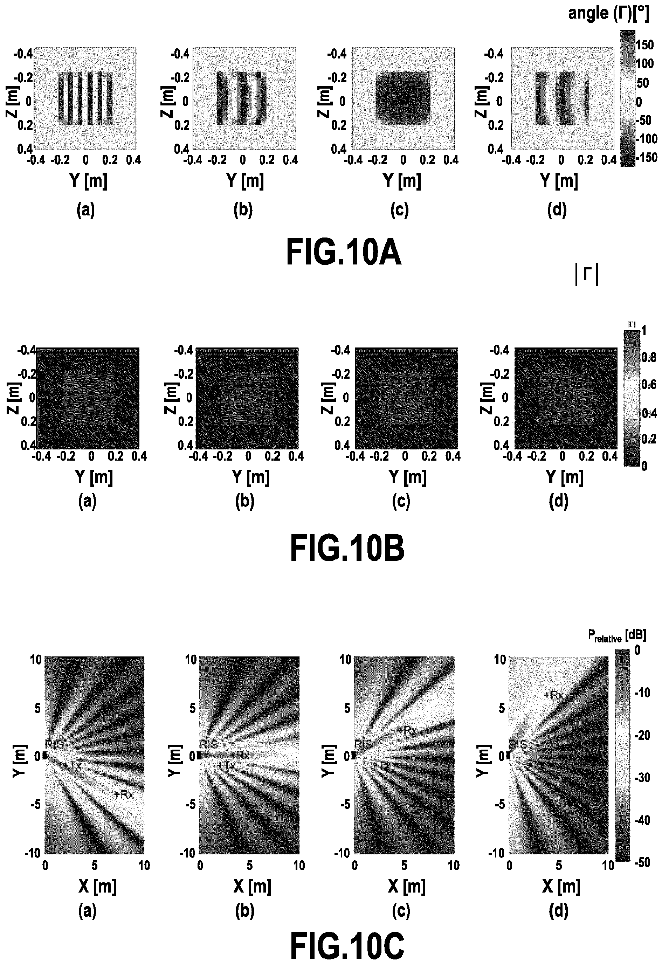

Figure 10A illustrates the calculated required phase of elements of a RIS in a wide beamwidth transmission, for the four cases.

Figure 10B illustrates the reflection coefficient magnitudes in a wide beamwidth transmission, for the four cases.

Figure 10C illustrates the relative received power in the $(O, \vec{i}, \vec{j},)$ plane in a wide beamwidth transmission, for the four cases.

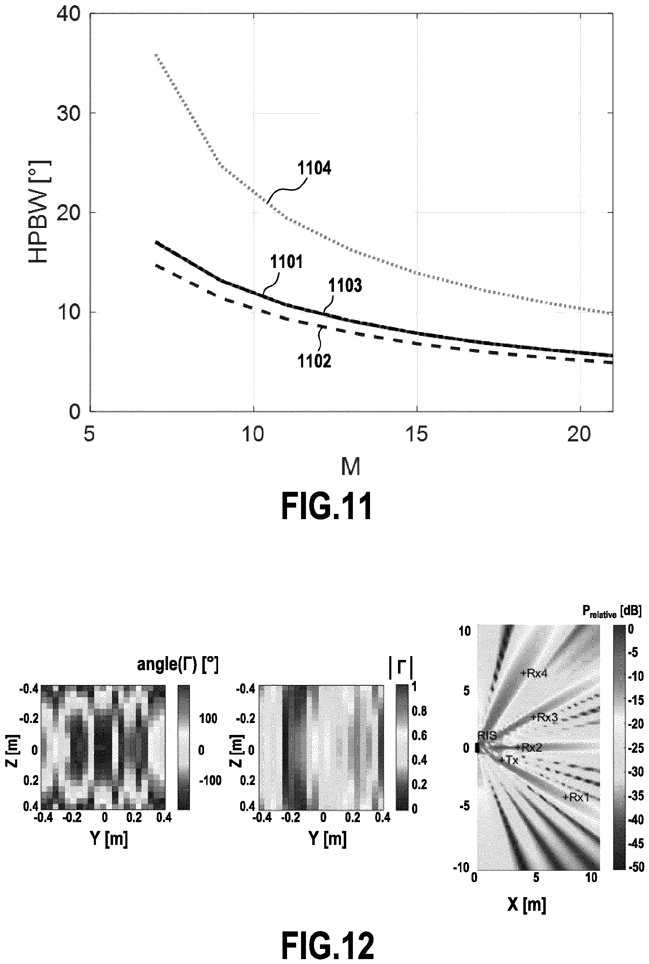

Figure 11 are plots of the Half-Power Beam Width in $(O, \vec{i}, \vec{j},)$ plane which illustrate the effect of varying the number of active RIS elements in $\vec{j}$, while keeping fixed the number of active RIS elements in $\vec{k}$, for the four cases.

Figure 12 illustrates the calculated required phase of elements of the RIS, the reflection coefficient magnitudes and the relative received power, in a multi-user configuration.

Detailed description

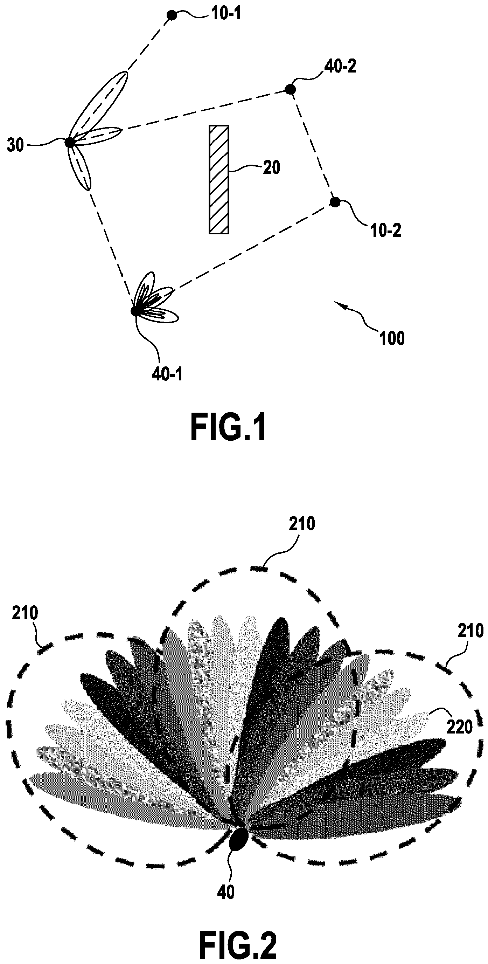

Figure 1 depicts, for illustrative purposes, transmission of signals between an emitter 30 and two receivers 10-1 and 10-2 of a wireless communication system in which the invention is applicable.

As shown in Figure 1, the signal travels by a line-of-sight path between the emitter 30 and the receiver 10-1, i.e., using a direct path between the emitter 30 and said receiver 10-1.

On the contrary, the emitter 30 cannot communicate with the receiver 10-2 using a direct path, due to the presence of an obstacle 20. Communication devices 40-1 and 40-2 are set up in the environment of the emitter 30 and of the receivers 10-1, 10-2, and act as relays between these devices. More precisely, the communication devices 40-1, 40-2 are configured to re-radiate a signal and thus, for each communication device, there exists a propagation path between the emitter 30 and the receiver 10-2. The relative locations of the emitter 30, of the receivers 10-1, 10-2 and of the relay devices 40-1, 40-2 may be identified using geographic coordinates, for example in a Cartesian coordinate system or in a spherical coordinate system.

Figure 1 also illustrates the radiation of the emitter 30. More precisely, Figure 1 schematically illustrates the generation of three beams by the emitter 30, i.e., using precoding.

In an implementation, the emitter is a user equipment, i.e., a device used by an end-user to communicate. It may be a smartphone or a laptop computer equipped with a mobile broadband adapter. And the receiver may be a base station, i.e., a piece of equipment that facilitates wireless communication between the user equipment and a network.

In an implementation, the invention applies to the 5G, e.g., the fifth-generation technology standard for broadband cellular networks. In an implementation, the emitter and/or the receiver are compatible with the Standard ETSI TS 123 501 (the current version being the version 17.4.0, published in May 2022 and also referenced as "3GPP TS 23.501 version 17.4.0 Release 17") and/or data transmission between the emitter 30 and the receivers 10-1 and 10-2 is compatible with the Standard ETSI TS 123 003 (the current version being the version 17.5.0, published in May 2022 and also referenced as "3GPP TS 23.003 version 17.5.0 Release 17"). In a variant, the invention applies beyond the fifth generation.

In an alternative, the emitter is a Wi-Fi Access Point, and the receiver is a Wi-Fi equipment.

In an implementation, the communication device is a Reconfigurable Intelligent Surfaces (RISs). This device may also be known under the names of Intelligent Reflecting Surfaces (IRSs), Large Intelligent Surfaces (LISs), or Software-Controlled Metasurfaces.

The person skilled in the art can consult the following articles to obtain further details on the Reconfigurable Intelligent Surfaces (RISs): "Antenna Theory Analysis and Design", C. A. Balanis, 3rd edition, Wiley-Interscience, 2005 ; "Reconfigurable Intelligent Surface-Aided Wireless Communications: Adaptive Beamforming and Experimental Validations", M. M. Amri & Al., IEEE Access, vol. 9, pp. 147442-147457, 2021 ; and, "Reconfigurable Intelligent Surfaces: A signal processing perspective with wireless applications," E. Björnson & Al., in IEEE Signal Processing Magazine, vol. 39, no. 2, pp. 135-158, March 2022.

In an implementation, this communication device is deployed on walls, ceiling, and furniture of an indoor environment, so as to enhance coverage. In a variant, it can be placed on highspeed vehicles, unmanned aerial vehicles (e.g., drones) or on buildings to achieve high spectral efficiency.

Figure 2 illustrates the principle of the invention with a first example of transmission of a radio signal as first and second beams.

A communication device 40 (which may correspond to the communication device 40-1 or 40-2 of Figure 1) is configured to perform a "1D scanning" or "1D beam sweeping" , i.e., a sweeping in an horizontal plane that may be parallel to the ground surface.

To cover the widest space allowed by the communication device 40, said communication device 40 could transmit M second beams 220 (also named narrow beams in the following description), represented with a solid color background. The invention aims at pre-configuring the communication device 40 with configuration data allowing transmission of K first beams 210 (also named wide beams in the following description) in addition to the M narrow ones, with $K < M$. These K first beams are represented with dotted borders in Figure 2. Each first beam 210 is equivalent to regrouping N second beams 220.

Hence, first the communication device scans its environment by transmitting the K first (wide) beams and selects the strongest one that yields optimal (or required or maximal) receiver's performances. Then, the communication device 40 scans the environment by transmitting the N second (narrow) beams "comprised within" the selected wide beam, and selects the narrow beam that yields optimal (or required or maximal) receiver's performances.

As illustrated by Figure 2, the method according to the invention reduces the number of tested configuration data (or through misuse of language of tested beams) from M to $L = K + N$ with L the number of tested configuration data, while having exactly the same performances in term of quality and performance. In the shown example, M=21, N=7 and K=3. Hence, using the method of the invention reduces the number of tested configuration data from 21 to 10.

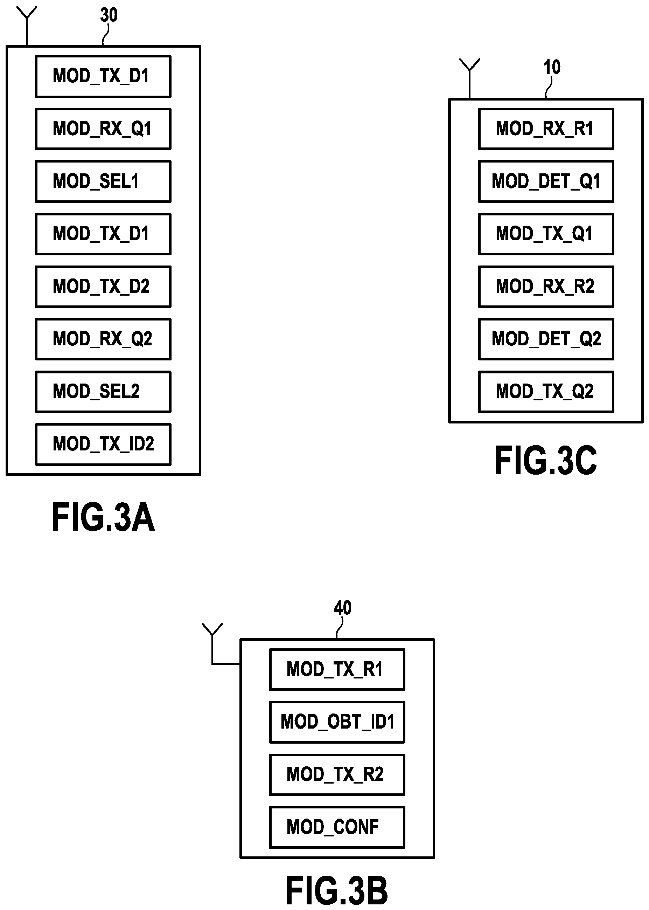

Figure 3A illustrates a particular implementation of an emitter according to the invention. Said emitter is configured to determine an optimal configuration of a communication device, by implementing a method for controlling a communication device according to the invention. Figure 3B illustrates an implementation a communication device according to the invention. Said communication device is configured to optimize transmission of an incident signal toward a receiver, by implementing a method for optimizing transmission of a signal according to the invention. Figure 3C illustrates a particular implementation of a receiver according to the invention. Said receiver is configured to evaluate quality of a received signal, by implementing a method for evaluating quality of a signal according to the invention.

The invention remains applicable whatever the nature of the radio network considered, in particular for a mobile telecommunication network implementing 3G (third generation of wireless mobile telecommunications technology), 4G (fourth generation of wireless mobile telecommunications technology), 5G (fifth generation of wireless mobile telecommunications technology), and/or B5G (acronym of Beyond 5G). The invention remains also applicable with a Wi-Fi (acronym of Wireless Fidelity) network, a WiMAX (acronym of Worldwide Interoperability for Microwave Access) network, a Satellite Internet Access network, etc.

In addition, no limitation is attached to the kind of data that may be shared over this radio network.

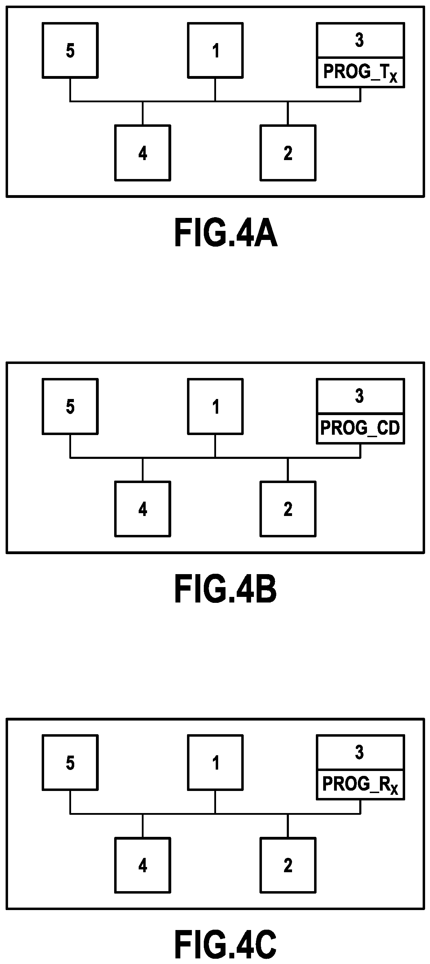

Figure 4A illustrates an example of the hardware architecture of an emitter according to the invention.

To this end, the emitter has the hardware architecture of a computer. As shown in Figure 4A, the emitter comprises a processor 1. Although illustrated as a single processor 1, two or more processors can be used according to particular needs, desires, or particular implementations of the emitter. Generally, the processor 1 executes instructions and manipulates data to perform the operations of the emitter and any algorithms, methods, functions, processes, flows, and procedures as described in the present disclosure.

The emitter also comprises communication means 5. Although illustrated as a single communication means 5 in Fig. 4A, two or more communication means can be used according to particular needs, desires, or particular implementations of the emitter. The communication means are used by the emitter for communicating with another electronic device that is communicatively linked to the radio network in a distributed environment. Generally, the communication means 5 are operable to communicate with the radio network and comprise logic encoded in software, hardware, or a combination of software and hardware. More specifically, the communication means 5 can comprise software supporting one or more communication protocols associated with communications such that the radio network or interface's hardware is operable to communicate physical signals within and outside of the illustrated emitter.

The emitter also comprises a random access memory 2, a read-only memory 3, and a non-volatile memory 4. The read-only memory 3 of the emitter constitutes a recording medium conforming to the invention, which is readable by processor 1 and on which is recorded a computer program PROG_TX conforming to the invention, containing instructions for carrying out the steps of the method for controlling a communication device according to the invention.

The program PROG_TX defines functional modules of the emitter, which are based on or control the aforementioned elements 1 to 5 of the emitter, and which comprise in particular:

- a module MOD_TX_D1 configured for transmitting first data to a communication device,

- a module MOD_RX_Q1 configured for receiving first quality data transmitted by a receiver through the communication device, the first quality data representing quality of a first radio signal received by a receiver,

- a module MOD_SEL1 configured for selecting a configuration data among a first plurality of configuration data, based on the received first quality data,

- a module MOD_TX_ID1 configured for transmitting data identifying the selected configuration data to the communication device,

- a module MOD_TX_D2 configured for transmitting second data to the communication device,

- a module MOD_RX_Q2 configured for receiving second quality data transmitted by the receiver through the communication device, the second quality data representing quality of the second radio signal received by the receiver,

- a module MOD_SEL2 configured for selecting a configuration data among a second plurality of configuration data, based on the received second quality data, and,

- a module MOD_TX_ID2 configured for transmitting, to the device, data identifying said selected configuration data.

In an implementation, the modules MOD_TX_D1, MOD_RX_Q1, MOD_TX_ID1, MOD_TX_D2, MOD_RX_Q2 and MOD_TX_ID2 are integrated to the communication means 5. The functionalities attached to each of the modules are explained in detail later on when describing modes of implementation of said configuring method.

Figure 4B illustrates an example of the hardware architecture of a communication device according to the invention.

To this end, the communication device has the hardware architecture of a computer. As shown in Figure 4B, the communication device comprises a processor 1. Although illustrated as a single processor 1, two or more processors can be used according to particular needs, desires, or particular implementations of the communication device. Generally, the processor 1 executes instructions and manipulates data to perform the operations of the communication device and any algorithms, methods, functions, processes, flows, and procedures as described in the present disclosure.

The communication device also comprises communication means 5. Although illustrated as a single communication means 5 in Fig. 4B, two or more communication means can be used according to particular needs, desires, or particular implementations of the communication device. The communication means are used by the communication device for communicating with another electronic device that is communicatively linked to the radio network in a distributed environment. Generally, the communication means 5 are operable to communicate with the radio network and comprise logic encoded in software, hardware, or a combination of software and hardware. More specifically, the communication means 5 can comprise software supporting one or more communication protocols associated with communications such that the radio network or interface's hardware is operable to communicate physical signals within and outside of the illustrated communication device.

The communication device also comprises a random access memory 2, a read-only memory 3, and a non-volatile memory 4. The read-only memory 3 of the communication device constitutes a recording medium conforming to the invention, which is readable by processor 1 and on which is recorded a computer program PROG_CD conforming to the invention, containing instructions for carrying out the steps of the method for optimizing transmission of a signal according to the invention.

The program PROG_CD defines functional modules of the communication device, which are based on or control the aforementioned elements 1 to 5 of the communication device, and which comprise in particular:

- a module MOD_TX_R1 configured for transmitting a first radio signal as K first beams through K different directions, wherein, for a first beam, elements of the communication device are configured according to a configuration data of a first plurality of configuration data for transmitting the radio signal through one of the K directions,

- a module MOD_OBT_ID1 configured for obtaining data representing a configuration data of the first plurality of configuration data, said configuration data being based on a first quality criterion,

- a module MOD_TX_R2 configured for transmitting a second radio signal as N second beams through N different directions,

  wherein, for a second beam, elements are configured according to a configuration data of a second plurality of configuration data for transmitting the radio signal through one of the N directions,

  wherein the directions of the second beams are comprised within the direction of the first beam associated to the obtained data,

- a module MOD_CONF configured for applying a configuration data of the second plurality of configuration data, based on a second quality criterion.

In an implementation, the modules MOD_TX_R1, MOD_OBT_ID1, MOD_TX_R2 are integrated to the communication means 5. The functionalities attached to each of the modules are explained in detail later on when describing modes of implementation of said configuring method.

Figure 4C illustrates an example of the hardware architecture of a receiver according to the invention.

To this end, the receiver has the hardware architecture of a computer. As shown in Figure 4C, the receiver comprises a processor 1. Although illustrated as a single processor 1, two or more processors can be used according to particular needs, desires, or particular implementations of the emitter. Generally, the processor 1 executes instructions and manipulates data to perform the operations of the receiver and any algorithms, methods, functions, processes, flows, and procedures as described in the present disclosure.

The receiver also comprises communication means 5. Although illustrated as a single communication means 5 in Fig. 4C, two or more communication means can be used according to particular needs, desires, or particular implementations of the receiver. The communication means are used by the receiver for communicating with another electronic device that is communicatively linked to the radio network in a distributed environment. Generally, the communication means 5 are operable to communicate with the radio network and comprise logic encoded in software, hardware, or a combination of software and hardware. More specifically, the communication means 5 can comprise software supporting one or more communication protocols associated with communications such that the radio network or interface's hardware is operable to communicate physical signals within and outside of the illustrated receiver.

The receiver also comprises a random access memory 2, a read-only memory 3, and a non-volatile memory 4. The read-only memory 3 of the receiver constitutes a recording medium conforming to the invention, which is readable by processor 1 and on which is recorded a computer program PROG_RX conforming to the invention, containing instructions for carrying out the steps of the method for evaluating quality of a signal according to the invention.

The program PROG_RX defines functional modules of the receiver, which are based on or control the aforementioned elements 1 to 5 of the receiver, and which comprise in particular:

- a module MOD_RX_R1 configured for receiving a first radio signal transmitted by a communication device as K first beams through K different directions;

- a module MOD_DET_Q1 configured for determining first quality data of the received first radio signal;

- a module MOD_TX_Q1 configured for transmitting first quality data to an emitter and through the communication device;

- a module MOD_RX_R2 configured for receiving a second radio signal transmitted as N second beams through N different directions;

- a module MOD_DET_Q2 configured for determining second quality data of the received second radio signal; and,

- a module MOD_TX_Q2 configured for transmitting second quality data to the emitter and through the communication device.

In an implementation, the modules MOD_RX_R1, MOD_TX_Q1, MOD_RX_R2, MOD_TX_Q2 are integrated to the communication means 5. The functionalities attached to each of the modules are explained in detail later on when describing modes of implementation of said configuring method.

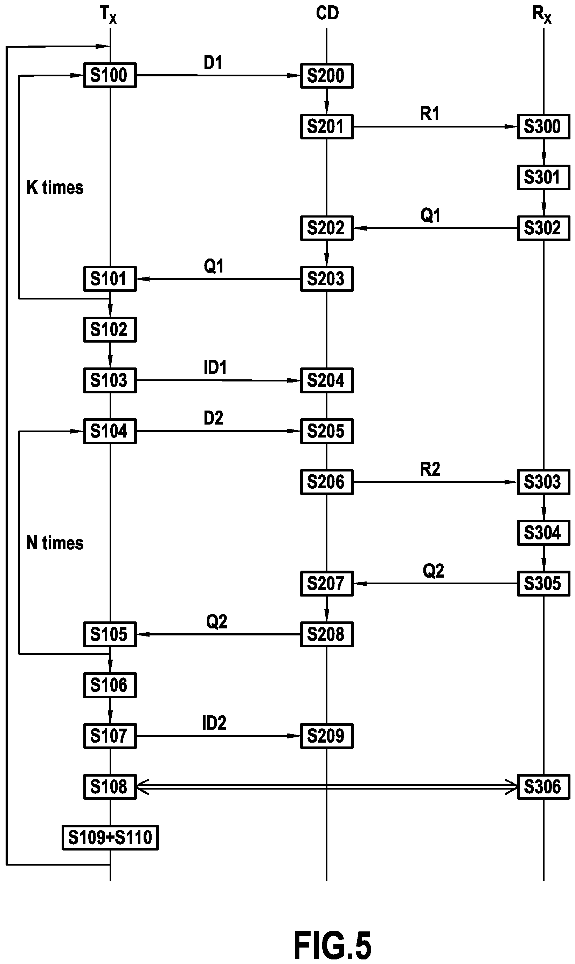

Figure 5 is a flowchart of a method for configuring a communication device for data transmission between an emitter and a receiver through said communication device. This method includes a method for controlling the communication device implemented by an emitter, a method for optimizing transmission of a signal implemented by the communication device, and a method for evaluating quality of a signal implemented by the receiver.

Main steps

As shown on Figure 5, the method for configuring a communication device comprises a first step S100 of transmitting first data to the communication device. In an implementation, this first data corresponds to sequence pilots. This transmission step S100 is performed by the module MOD_TX_D1 of the emitter. At step S200, this first data is received by the communication device and upon receiving said first data, the communication device beamforms a first radio signal, e.g., transmit the first radio signal as a first (wide) beam, in a predetermined direction (S201). Beamforming in a predetermined direction is made possible by configuring the communication device with a specific configuration data selected among a first plurality of configuration data and that adapts the phase shifts and/or the amplitude response of the elements of the communication device. In some implementations, said first plurality of configuration data is stored within a memory in the communication device. In a variant, this first plurality of configuration data is accessible by the communication data, using the communication means 5. This step S201 is performed by the module MOD_TX_R1 of the communication device.

This first signal may be received (or detected) by the module MOD_RX_R1 of the receiver at step S300. Upon receiving the first signal, the receiver determines the signal-to-noise ratio of the received first radio signal at step S301. This determining step S301 is performed by the module MOD_DET_Q1 of the receiver. The method further comprises a step of transmitting said signal-to-noise ratio to the emitter through the communication device (steps S302, S202, S203, and S101). The transmitting step S302 is performed by the module MOD_TX_Q1 of the receiver, and said signal-to-noise ratio is received by the module MOD_RX_Q1 of the emitter.

In an implementation, steps S100, S200, S201, S300, S301, S302, S202, S203 and S101 are re-iterated K times, so that the first data are transmitted K times to the communication device, leading to the transmission of K first beams by the communication device. In an implementation, the first data transmitted K times are equal to each other.

In an alternative, during an (at least one) iteration, the first radio signal transmitted by the communication device as a first beam is not detected by the receiver. In that case, steps S300, S301, S302, S202, S203, S101 are not performed. Without receiving any signal-to-noise ratio after a predetermined period of time, the emitter then determines that the configuration data used by the communication device to beamform said first radio signal is not optimal, and it then associates a signal-to-noise ratio with a predetermined value (e.g., 0) to said configuration data.

The method for configuring a communication device also comprises a step S102 of selecting a configuration data of the communication device among the first plurality of configuration data, based on the received signal-to-noise ratio. This determining step S102 is performed by the module MOD_SEL1 of the emitter. In an implementation, the selection comprises selecting the first configuration data that yields the best receiver's performances. In a variant, the selection comprises selecting a first configuration data that yields to receiver's performances superior to a predetermined threshold (e.g., a signal-to-noise ratio superior to 40 dB). The method then comprises a step S103 of transmitting data identifying the selected configuration data to the communication device which is performed by the module MOD_TX_ID1 of the receiver. This data is received at step S204 by the module MOD_OBT_ID1 of the communication device. In an implementation, configuration data of the first plurality of configuration data are identified by a unique identifier, and the emitter transmits, to the communication device, the identifier of the selected configuration data.

The method for configuring a communication device then comprises a step S104 of transmitting second data to the communication device. This transmitting step S104 is performed by the module MOD_TX_D2 of the emitter. In an implementation, this second data also corresponds to sequence pilots. At step S205, this second data is received by the communication device and upon receiving said second data, the communication device transmits a second radio signal as a second (narrow) beam in a predetermined direction, by applying a specific configuration data selected among a second plurality of configuration data (S206). This beamforming step S206 is performed by the module MOD_TX_R2 of the communication device.

This second signal may be received (or detected) by the module MOD_RX_R2 of the receiver at step S303. Upon receiving the second signal, the receiver determines a signal-to-noise ratio of the received second radio signal at step S304. This determining step S304 is performed by the module MOD_DET_Q2 of the receiver. The method further comprises a step of transmitting said signal-to-noise ratio to the emitter through the communication device (steps S305, S207, S208, and S105). The transmitting step S305 is performed by the module MOD_TX_Q2 of the receiver, and this signal-to-noise ratio is received by the module MOD_RX_Q2 of the emitter.

In an implementation, steps S104, S205, S206, S303, S304, S305, S207, S208 and S105 are re-iterated N times, so that the second data are transmitted N times to the communication device, leading to the transmission of N second beams by the communication device. In an implementation, the second data transmitted N times are equal to each other.

According to the invention and as illustrated by Figure 2, the directions of said second beams 220 are comprised within the direction of the first beam 210 associated to the configuration data selected at step S102. More precisely, the direction of the first beam may be formalized by an angular sector / angle interval, and the directions of said second beams correspond to portions of this angular sector / angle interval. In an example, said first beam is propagated at a direction formalized by an interval of [-30°;+30°], and the directions of the second beams are comprised within said interval [-30°;+30°], and may be of [-30°;-15°],[-15°;0°][0°;15°] and [+15°;+30°].

In an implementation, during an (at least one) iteration, the second radio signal transmitted by the communication device as a second beam is not detected by the receiver. In that case, steps S303, S304, S305, S207, S208, S105 are not performed. Without receiving any signal-to-noise ratio after a predetermined period of time, the emitter then determines that the configuration data used by the communication device to beamform said second radio signal during this iteration is not optimal, and may then assign the configuration with a signal-to-noise ratio having a low value (e.g., 0).

The method for configuring a communication device also comprises a step S106 of selecting a configuration data of the communication device among the second plurality of configuration data, based on the received signal-to-noise ratio. This selecting step is performed by the module MOD_SEL2 of the emitter.

In an implementation, the selection comprises selecting the second configuration data that yields the best receiver's performances. In a variant, the selection comprises selecting a second configuration data that yields to receiver's performances superior to a predetermined threshold (e.g., a signal-to-noise ratio superior to 40 dB). The method then comprises a step S107 of transmitting data identifying the selected configuration data to the communication device which is received at step S209 by the communication device. In an implementation, configuration data of the second plurality of configuration data are identified by a unique identifier, and the emitter transmits, to the communication device, the identifier of the selected configuration. This transmitting step is performed by the module MOD_TX_ID2 of the emitter. Upon receiving said identifying data at step S209, the communication device applies the configuration data identified by the received identifying data for relaying data between the emitter and the receiver. This step is performed by the module MOD_CONF of the communication device.

The method then comprises a step of exchanging data between the emitter and the receiver through the communication device (steps S108 and S306), said communication device being configured to beamform a radio signal using the configuration data selected at step S107.

Monitoring the quality of transmission

In an implementation, the emitter regularly monitors the quality of the transmission between the emitter and the receiver, and the method for configuring a communication device further comprises computing (S109) a signal-to-noise ratio, and determining (S110) that said signal-to-noise ratio is inferior to a predetermined threshold, e.g, 20dB. In a variant, the predetermined threshold can be set to a drop of (e.g. - 15 dB) from an SNR value determined immediately after step S106 or step S107. If so, the method for configuring a communication device then reiterates the whole process.

In an alternative, it is the receiver that regularly monitors the quality of the transmission between the emitter and the receiver.

In an alternative, steps S100, S200, S201, S300, S301, S302, S202, S203 and S101 are not re-iterated K times, but the only configuration data tested are those allowing the communication device to transmit a radio signal as beams which are immediately adjacent to the first (wide) beam associated to the configuration data selected at step S102 during the first iteration of the method. This implementation is based on the probability that the receiver communicating with the emitter may not move too quickly, but may rather move from a given angular sector to another angular sector immediately adjacent to the given angular sector.

Finally, although the invention has been described above considering a signal-to-noise ratio, another quality criteria may be considered such as a decoding error rate, a signal-to-interference-and-noise ratio, a bit-error-rate, etc.

xD scanning

Although the invention has been described above considering a communication device configured to perform a "1D scanning" or "1D beam sweeping", i.e., a sweeping in an horizontal plane that may be parallel to the ground surface, it is important to note that this is only one variant implementation of the invention. In general, no limitation is attached to the number of dimensions scanned by the communication device.

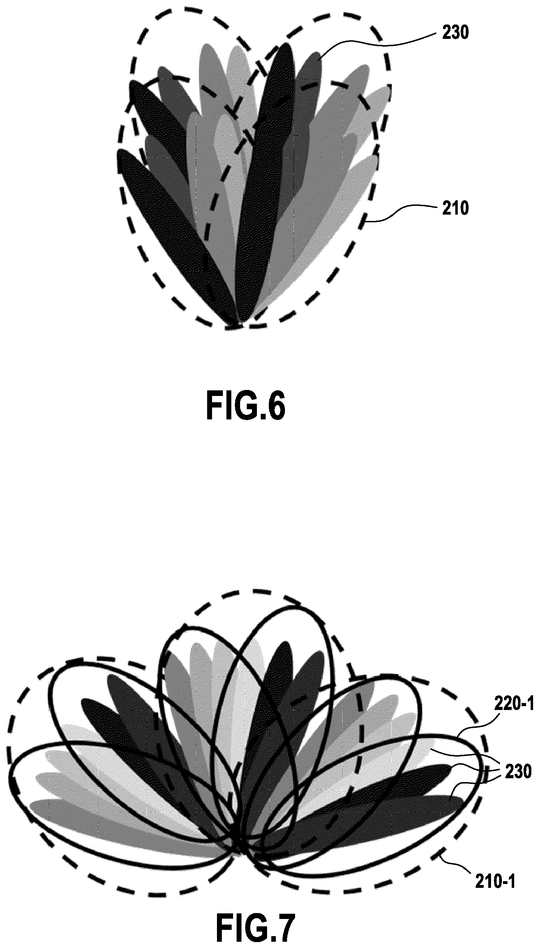

Figure 6 illustrates the principle of the invention with an example of transmission of a radio signal as wide and narrow beams. As illustrated by Figure 6, the communication device 40 is configured to perform a "2D scanning" or "2D beam sweeping", i.e., a sweeping in a space defined by $(O, \vec{i}, \vec{j}, \vec{k})$, with O the location of the communication device in space, and , $\vec{i}, \vec{j}, \vec{k}$ three unit normal vectors defining the metric properties of the space.

Transmitting of the beams with several "levels" or "stages"

Up until now, the invention has been described above considering a communication device configured to transmit N second (narrow) beams, with N second beams being comprised within one beam selected among K first (wide) beams. However, it is worth noting that this is only one variant implementation of the invention and that no limitation is attached to the number of "levels"

In some implementations, the method for configuring the communication device comprises determining a preferred number *l* of levels that minimizes the number of tested configuration data; and re-iterating i-times the step of transmitting "narrower beams" comprised with a beam of a higher level.

In an example, once the second (narrow) beam has been selected, the method for configuring a communication device may further determine a third beam "narrower" that the second (narrow) beam, i.e., having a direction comprised within the direction of a second beam, and that yields to even better receiver's performances. According to that implementation, the method further comprises :

- transmitting, by the communication device, a radio signal as third beams through P different directions,

    wherein, for a third beam, elements are configured according to a configuration data of a third plurality of configuration data for transmitting the radio signal through one of the P directions,

    wherein the directions of the third beams are comprised within the direction of a second beam selected at step S106, and,

- applying, by the communication device, a configuration of the third plurality of configuration data, based on a quality criterion.

Figure 7 illustrates the principle of the invention with an example of transmission of a radio signal as first, second and third beams. First, a sweeping of the environment with the K first beams (represented with dashed lines) is performed. Then, one of these K first beams that yields to optimal (i.e., maximal) receiver's performances is selected (for example the first beam 210-1 on the far right of Fig. 7), a sweeping of an angular sector covered by the selected first beam is performed, and N second beams (represented with solid lines) comprised within the selected first beam are transmitted. Then one of these N second beams that yields to optimal (i.e., maximal) receiver's performances is selected (for example the second beam 220-1 on the far right of Fig. 7), a sweeping of an angular sector covered by the selected second beam is performed, and P third beams (230) belonging to the selected second beam are transmitted. Finally, the configuration data of the third beam that yields to optimal (i.e., maximal) receiver's performances is selected.

It is worth noting that this Figure 7 is only one example of implementation of the invention and that no limitation is attached to the number of "levels".

In an implementation, an optimal number of "levels" may be determined that minimizes the number of tested configurations. Such optimal number I may be determined as follows.

Let M be the total number of configuration data for generating narrow beams to cover the widest space allowed by the communication device, and let us consider that for each level, a same number of $N$ beams is comprised within a beam of the level above (e.g., that N second beams are comprised within a first beam, and that N third beams are comprised within a second beam). In this case, we have a logarithmic tree of base N, and the number $I$ of the beam levels is given by:

$$I = log_N(M)$$

Since at every level, $N$ beams have to be tested, the total number $L$ of tested configuration data is given by:

$$L = N.I = N.log_N(M) = N.\frac{\ln(M)}{\ln(N)}$$

Let $L'$ be the derivative of $L$. $L'$ reaches a minimal or maximal value when when $L'(N) = 0$, e.g., when $N = e$ i.e., when $I = \ln(M)$. And in that case, $L = e.\ln(M)$.

The number of tested beams reduction factor $\delta$ can be calculated as follows:

$$\delta = \frac{M - N \log_N M}{M} = 1 - \frac{N \log_N(M)}{M}$$

From this equation, it can be deduced that as the total number M of configurations data for generating narrow beams to cover the widest space allowed by the communication device increases, the reduction factor also increases.

Let us now consider $N = 2$. Then, $I = log_2(M)$, $L = 2log_2(M)$ and

$$\delta = \frac{M - 2 \log_2 M}{M} = 1 - \frac{2 \log_2(M)}{M}$$

For M = 21, then $I = log_2(21) \approx 4$ and $L = 2log_2(21) \approx 8$.

### Determination of an optimal number of wide beams

It is worth noting that the communication device stores or can have access to a first and second plurality of configuration data which are predetermined.

To further limit the number of configuration data to test before selecting one that yields to optimal (or required) receiver's performances, the optimal number K of wide beams may be determined as follows.

Let $L$ be the number of tested configuration data, $N$ the number of narrow beams comprised within a wide beam, and M the total number of configurations data for generating narrow beams to cover the widest space allowed by the communication device.

Then, $$L = K + N = \frac{M}{N} + N$$ . Let L' be the derivative of L, then, $$L'(N) = \frac{-M}{N^2} + 1$$ and $L'$ reaches a minimal or maximal value when when $L'(N) = 0$, e.g., when $N = \sqrt{M}$ and then when $K = \sqrt{M}$ . And in that case, $L = 2\sqrt{M}$ .

In this optimal case, the number of tested beams reduction factor $\delta$ an be calculated as follows:

$$\delta = \frac{M - 2\sqrt{M}}{M} = 1 - \frac{2}{\sqrt{M}}$$

So as the total number M of configurations data for generating narrow beams to cover the widest space allowed by the communication device increases, the reduction factor $\delta$ also increases.

Figure 8A illustrates an evolution of the number L of tested beams as a function of a number N of wide beams, when M = 100. Plot 800 corresponds to the single-level case, while plot 810 represents the multi-level case.

As illustrated by Figure 8A, in the single-level case, the number of tested configurations is minimized for N=10. In the multi-level case, the number of tested configurations is minimized for N=2.

Figure 8B illustrates the number of tested beams reduction factor $\delta$ as a function of the number M of tested beams. Carve 820 represents single-level case, and carve 830 represents multi-level case, for N=3. As it can be seen, the multi-level solution presents better results than the single-level one.

### Other variants

Although the invention has been described above and illustrated considering a communication device configured to transmit beams (of a given level) covering a same angular sector, it is important to note that this is only one variant implementation of the invention. And beams of a same level may cover angular sectors with different angles.

It is also worth noting that the invention can apply to "focalizing RISs" also called "focusing RISs". A focalizing RIS is configured to both have wide and narrow focal zones (also called focalization zones).

Implementation of a narrow beam realization

Let us consider a reference frame is defined by $(O, \vec{i}, \vec{j}, \vec{k})$, with O is a particular point in space and , $\vec{i}, \vec{j}, \vec{k}$ three unit normal vectors defining the metric properties of the space, a RIS in the $(O, \vec{j}, \vec{k})$ plan, and an emitter and a receiver both in the $(O, \vec{i}, \vec{j},)$ plan.

This RIS comprises 21x21 elements and is designed for 3.75GHz 5G's band with an interelement distance of half a wavelength. In a spherical coordinate system (r, $\theta$, $\emptyset$), the position of a point is specified by three numbers: the radial distance (r), the polar angle ($\theta$), and the azimuthal angle ($\varphi$).

In this example, the RIS is centered at (0m,0°,0°) and the emitter is located at (2m,90°,-30°). Four cases are considered, e.g., where the receiver is respectively located at

(a) (8m,90°,-30°),

(b) (3m,90°,0°),

(c) (5m,90°,30°) and

(d) (7m,90°,60°).

The different cases were simulated using MATLAB. Figure 9A illustrates the calculated required phase of every element of the RIS, for the four cases previously enumerated.

Assuming that we have an emitter at azimuth angle -30° (referenced to the RIS center), Figure 9A (a) shows a configuration for the phase of different RIS elements allowing a reflection in the direction of -30°, Figure 9A (b) shows another configuration for the phase of different RIS elements allowing a reflection in the direction of 0°, Figure 9A (c) shows another configuration for the phase of different RIS elements allowing a reflection in the direction of 30° and Figure 9A (d) shows another configuration for the phase of different RIS elements allowing a reflection in the direction of 60°.

Figure 9B illustrates the relative received power (normalized to have a maximum value of 0dB) in the $(O, \vec{i}, \vec{j},)$ plane, for the four cases previously enumerated. As it can be seen, in all four cases illustrated by Figures 9B (a) to (d), the received power is maximized in the receiver's direction, since a beam is successfully formed in the receiver's direction.

Figure 9C illustrates the beamwidth calculation method (in the inset) and the obtained beams in the (0, $\vec{i}, \vec{j},)$ plane, for the four cases previously enumerated.

The obtained beamwidth may be calculated by taking the power level on a circle centered at the RIS and passing by the location of the receiver, as shown in the insets.

The obtained beam patterns in the $(O, \vec{i}, \vec{j},)$ plane are given by the blue dashed curves in the inset of Figure 9C. The Half Power Beamwidth (HPBW), i.e. the angle at which the power reduces by 3dB from its maximum value, on both sides of the maximum value, in the $(O, \vec{i}, \vec{j},)$ plane is respectively around 5.6° for case (a), 4.8° for case (b), 5.6° for case (c) and 9.8° for case (d). This means that, as expected, the best beam formation is achieved in the RIS axis (i.e. for ø=O°). A similar result applies for the HPBW in the $(O, \vec{j}, \vec{k})$ plane.

It should be noted that the RIS's phase calculation method can be easily generalized to a complex propagation environment, e.g., including shadowing and fading. In wireless telecommunications, shadowing may occur when obstacles affect the wave propagation, and multi-path fading may occur when a radio signal is received over a plurality of paths, which may then create destructive interference of the radio signal. In that case, let H be the channel matrix from the transmitter to the receiver through the RIS, then the required phase of every RIS element ($\phi$) is given by $\varphi = \angle H^*$, with $\angle$ an angle and * the complex conjugate.

Implementation of a wide beam realization

Figure 10A illustrates the calculated required phase of elements of the RIS for a wide beamwidth, for the four cases previously enumerated, and Figure 10B illustrates the reflection coefficient magnitudes for a wide beamwidth, for the four cases previously enumerated. Finally, figure 10C illustrates the relative received power (normalized to have a maximum value of 0dB) in the $(0, \vec{i}, \vec{j},)$ plane for a wide beamwidth, for the four cases previously enumerated.

The RIS's beamwidth may be widened by setting the complex reflection coefficient of some elements to zero, i.e., by switching off some elements of the RIS. Taking the previous example and using 11x11 central elements while setting the reflection coefficient of the others elements to zero as shown in Figures 10A and 10B, the resulted beam can be widened as shown in Figure 10C, when compared with the beams of Figure 9B.

The obtained beam patterns in the $(O, \vec{i}, \vec{j},)$ plane are given by the red curves in the inset of Figure 9C. The HPBW in this plane is respectively around 10.7° for case (a), 9.2° for case (b), 10.7° for case (c) and 19.5 for case (d). A similar result applies for the HPBW in the $(O, \vec{j}, \vec{k})$ plane.

It is worth noting that Figure 7 is only a nonlimiting example, and that the number of active RIS elements can be different in length and in width. More precisely, reducing the number of active RIS elements in $\vec{j}$ will only affect the beamwidth in the $(0, \vec{i}, \vec{j},)$ plane. Similarly, reducing the number of active RIS elements in $\vec{k}$ will only affect the beamwidth in the $(O, \vec{j}, \vec{k})$ plane.

In the given example, only reducing the number of active RIS elements in $\vec{j}$ from 21 to 11, while leaving the number of active elements in $\vec{k}$ at 21, the obtained HPBW in the $(0, \vec{i}, \vec{j})$ plane are still 10.7°, 9.4°, 10.7° and 19.5, but the vertical HPBW are unchanged compared to the original case (5.6°, 4.8°, 5.6° and 9.8°).

Figure 11 illustrates plots of the HPBW in $(O, \vec{i}, \vec{j})$ plane which illustrate the effect of varying the number of active RIS elements in $\vec{j}$, while keeping fixed the number of active RIS elements in $\vec{k}$, for the four cases previously enumerated. More precisely, plot 1101 concerns case (a), plot 1102 case (b), 1103 case (c), and 1104 case (d).

In the given example, the number of active RIS elements in $\vec{k}$ is fixed to 21. As it can be seen, multiplying the number of the elements by a factor a, divides the HPBW by approximately the same factor.

Figure 12 illustrates the calculated required phase of every element of the RIS (Figure 12 (A)), the reflection coefficient magnitudes (Figure 12 (b)) and the relative received power (Figure 12 (c)), in a multi-user configuration. More precisely, Figure 12 illustrates the case where four user equipment's are simultaneously communicating with the emitter, when they are located at

(a) (8m,90°,-30°),

(b) (3m,90°,0°),

(c) (5m,90°,30°) and

(d) (7m,90°,60°).

More precisely, Figure 12 illustrates simulation results when serving all the four users simultaneously, using the superimposition method described hereafter.

Let $\Gamma_i$ be the complex reflection coefficient of a RIS element, $|\Gamma_i|$ the reflection magnitude and $\varnothing_i$ the reflection phase. The superimposition method comprises a first step of computing the complex reflection coefficient such that $\Gamma_i = |\Gamma_i| e^{j\varnothing_i}$ for having a single radio signal beamformed in the direction of a given user $i$.

Then, the required reflection coefficient when considering all beams may be computed as follows :

$$\Gamma = \frac{1}{I} \sum_{i=1}^{I} \Gamma_i = \frac{1}{I} \sum_{i=1}^{I} |\Gamma_i| e^{j\varnothing_i}$$

It is worth noting that the term $\frac{1}{I}$ is required because the reflection coefficient magnitude should not be higher than "1".

In some implementations, for every beam, all the RIS elements have an identical 'unity' reflection magnitude, i.e. $|\Gamma_i| = 1$, the last equation can be reduced so that

$$\Gamma = \frac{1}{I} \sum_{i=1}^{I} e^{j\varnothing_i}$$

**Claims**

1. A method for configuring a communication device for data transmission between an emitter and a receiver through said communication device, the device comprising elements, the method comprising, at the communication device:

   - (i) transmitting (S201) a first radio signal as K first beams through K different directions, wherein, for a first beam, elements of the device are configured according to a configuration data of a first plurality of configuration data for transmitting the radio signal through one of the K directions;
   - (ii) obtaining (S204) data representing a configuration data of the first plurality of configuration data, said configuration data being based on a first quality criterion;
   - (iii) transmitting (S206) a second radio signal as N second beams through N different directions,

   wherein, for a second beam, elements are configured according to a configuration data of a second plurality of configuration data for transmitting the radio signal through one of the N directions,
   wherein the directions of the second beams are comprised within the direction of the first beam associated to the obtained data; and,

   - (iv) applying (S209) a configuration data of the second plurality of configuration data, based on a second quality criterion.

2. The method of Claim 1, wherein the configuration data comprise data for adjusting a phase shift of an element between a received signal and a transmitted signal, so that the transmitted signal is redirected in a predetermined direction.

3. The method of Claim 1 or 2, further comprising:

   - receiving (S200), by said device and previously to step (i), first data transmitted by the emitter, the transmission of the first radio signal being based on said first data ;
   - receiving (S101), by the emitter and following step (i), first quality data transmitted by the receiver through the device, the first quality data representing quality of the first radio signal received by the receiver;

- selecting (S102), by the emitter, a configuration data among the first plurality of configuration data, based on the received first quality data; and,
- step (ii) comprises receiving, from the emitter and by the device, data identifying the selected configuration data.

4. The method of Claim 3, further comprising:

- receiving (S205), by said device and previously to step (iii), second data transmitted by the emitter, the transmission of the second radio signal being based on said second data;
- receiving (S105), by the emitter and following step (iii), second quality data transmitted by the receiver through the device, the second quality data representing quality of said second radio signal received by the receiver;
- selecting (S106), by the emitter, a configuration data among the second plurality of configuration data, based on the received second quality data; and,
- transmitting (S107), by the emitter and previously to step (iv), data identifying said selected configuration data to the device.

5. The method of one of Claims 1 to 4, further comprising, following step (iv):

- determining (S110), by the emitter or the receiver, that a third quality criterion is inferior to a predetermined threshold when exchanging data between the emitter and the receiver through the device;
- transmitting the second radio signal as N' second beams through N' different directions,

   wherein, for a second beam, elements are configured according to a configuration data of the second plurality of configuration data for transmitting the radio signal through one of the N' directions,
   wherein the directions of the N' second beams are comprised within the direction of a beam adjacent to said first beam associated to the obtained data; and,

- applying a configuration data of the second plurality of configuration data, based on a fourth quality criterion.

6. The method of one of Claims 1 to 5, further comprising, determining K so that K corresponds to a preferred number of first beams according to a criterion for optimizing a number of iterations.

7. The method of Claim 6, wherein K corresponds to a preferred number of first beams, wherein

$$K = arr(\sqrt{M})$$, with arr(.) a rounding function, and M a number of second beams necessary for covering the widest space allowed by the communication device.

8. The method of one of Claims 1 to 7, further comprising :

- transmitting, by the device, a third radio signal as $P_i$ third beams through P different directions,

   wherein, for a third beam, elements are configured according to a configuration data of a third plurality of configuration data for transmitting the radio signal through one of the P directions,
   wherein the directions of the third beams are comprised within the direction of a second beam transmitted according to the configuration data applied at step (iv); and,

- applying, by the device, a configuration of the third plurality of configuration data, based on a fifth quality criterion.

9. The method of Claim 8, further comprising:

- determining a preferred number $i$ of stages according to a criterion for optimizing a number of iterations ;
- re-iterating i-times the transmitting and applying steps of Claim 8.

10. The method of Claim 9, wherein the determining comprises computing $i = arr(ln(M))$, with M a number of second beams necessary for covering the widest space allowed by the communication device, and arr(.) a rounding function.

11. The method of one of Claims 1 to 10, wherein the emitter and/or the receiver are compatible with the Standard ETSI TS 123 501.

12. The method of one of Claims 1 to 10, wherein data transmission is compatible with the Standard ETSI TS 123 003.

13. A communication device comprising:

   elements;
   at least one processor; and
   a memory containing a program implementing a method for configuring said communication device for data transmission between an emitter and a receiver through said communication device, the method comprising:

- (i) transmitting (S201) a first radio signal as K first beams through K different directions, wherein, for a first beam, elements are configured according to a configuration data of a first plurality of configuration data for transmitting the radio signal through one of the K directions;

- (ii) obtaining (S204) data representing a configuration data of the first plurality of configuration data, said configuration data being based on a first quality criterion;

- (iii) transmitting (S206) a second radio signal as N second beams through N different directions,

wherein, for a second beam, elements are configured according to a configuration data of a second plurality of configuration data for transmitting the radio signal through one of the N directions, wherein the directions of the second beams are comprised within the direction of the first beam associated to the obtained data; and,

- (iv) applying (S209) a configuration data of the second plurality of configuration data, based on a second quality criterion.

14. A system comprising the communication device of Claim 13, the system further comprising an emitter comprising at least one processor; and a memory containing a program implementing a method for configuring a communication device for data transmission between said emitter and a receiver through said communication device, the method comprising:

- transmitting (S100) first data to the device;

- receiving (S101) first quality data transmitted by the receiver through the device, the first quality data representing quality of the first radio signal received by the receiver;

- selecting (S102) a configuration data among a first plurality of configuration data, based on the received first quality data;

- transmitting (S103) data identifying the selected configuration data to the device;

- transmitting (S104) second data to the device;

- receiving (S105) second quality data transmitted by the receiver through the device, the second quality data representing quality of the second radio signal received by the receiver;

- selecting (S106) a configuration data among a second plurality of configuration data, based on the received second quality data; and,

- transmitting (S107), to the device, data identifying said selected configuration data.

15. A system comprising the communication device of Claim 13, the system further comprising a receiver comprising at least one processor; and a memory containing a program implementing a method for configuring said communication device for data transmission between said emitter and said receiver through said communication device, the method comprising:

- receiving (S300) the first radio signal transmitted by the device as K first beams through K different directions;

- determining (S301) first quality data of the received first radio signal;

- transmitting (S302) first quality data to the emitter and through the device;

- receiving (S303) the second radio signal transmitted as N second beams through N different directions;

- determining (S304) second quality data of the received second radio signal; and,

- transmitting (S305) second quality data to the emitter and through the device.

16. A computer program which on execution by a communication device causes the communication device to execute a method for configuring said communication device for data transmission between an emitter and a receiver through said communication device, the method comprising :

- (i) transmitting (S201) a first radio signal as K first beams through K different directions, wherein, for a first beam, elements of the communication device are configured according to a configuration data of a first plurality of configuration data for transmitting the radio signal through one of the K directions;

- (ii) obtaining (S204) data representing a configuration data of the first plurality of configuration data, said configuration data being based on a first quality criterion;

- (iii) transmitting (S206) a second radio signal as N second beams through N different directions,

wherein, for a second beam, elements are configured according to a configuration data of a second plurality of configuration data for transmitting the radio signal through one of the N directions, wherein the directions of the second beams are comprised within the direction of the first beam associated to the obtained data; and, (iv) applying (S209) a configuration data of the second plurality of configuration data, based on a second quality criterion.

17. A non-transitory computer-readable medium storing a program which, when executed by a microprocessor or computer system, causes the microprocessor or computer system to perform a method for configuring a communication device for data transmission between an emitter and a receiver through said communication device, the method comprising:

- (i) transmitting (S201) a first radio signal as K first beams through K different directions, wherein, for a first beam, elements of the communication device are configured according to a configuration data of a first plurality of configuration data for transmitting the radio signal through one of the K directions;
- (ii) obtaining (S204) data representing a configuration data of the first plurality of configuration data, said configuration data being based on a first quality criterion;
- (iii) transmitting (S206) a second radio signal as N second beams through N different directions,

wherein, for a second beam, elements are configured according to a configuration data of a second plurality of configuration data for transmitting the radio signal through one of the N directions, wherein the directions of the second beams are comprised within the direction of the first beam associated to the obtained data; and,

- (iv) applying (S209) a configuration data of the second plurality of configuration data, based on a second quality criterion.

FIG.1

FIG.2

30

MOD_TX_D1

MOD_RX_Q1

MOD_SEL1

MOD_TX_D1

MOD_TX_D2

MOD_RX_Q2

MOD_SEL2

MOD_TX_ID2

# FIG.3A

10

MOD_RX_R1

MOD_DET_Q1

MOD_TX_Q1

MOD_RX_R2

MOD_DET_Q2

MOD_TX_Q2

# FIG.3C

40

MOD_TX_R1

MOD_OBT_ID1

MOD_TX_R2

MOD_CONF

# FIG.3B

**FIG.4A**

**FIG.4B**

**FIG.4C**

**FIG.5**

**FIG.6**

**FIG.7**

**FIG.8A**

**FIG.8B**

FIG.9A

FIG.9B

FIG.9C

FIG.10A

FIG.10B

FIG.10C

FIG.11

FIG.12

Europäisches
Patentamt

European
Patent Office

Office européen
des brevets

# EUROPEAN SEARCH REPORT

Application Number

EP 22 30 5947

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 962 006 A1 (VESTEL ELEKTRONIK SANAYI VE TICARET AS [TR]) 2 March 2022 (2022-03-02) * paragraph [0007] * * page 20 * * paragraph [0046] – paragraph [0048] * * paragraph [0059] – paragraph [0075] * * figures 1, 2, 3A, 3B * * paragraph [0079] * ----- | 1-17 | INV. H04B7/026 H04B7/06 H04B7/08 |

TECHNICAL FIELDS
SEARCHED     (IPC)

H04B

The present search report has been drawn up for all claims

| Place of search | Date of completion of the search | Examiner |
|---|---|---|
| Munich | 15 November 2022 | Spinnler, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 5947

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2022

| Patent document cited in search report | | Publication date | Patent family member(s) | | Publication date |
|---|---|---|---|---|---|
| EP 3962006 | A1 | 02-03-2022 | EP | 3962006 A1 | 02-03-2022 |
| | | | WO | 2022049112 A1 | 10-03-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 23.501 version 17.4.0 Release 17,* May 2022
- *3GPP TS 23.003 version 17.5.0 Release 17,* May 2022
- **C. A. BALANIS.** Antenna Theory Analysis and Design. Wiley-Interscience, 2005
- **M. M. AMRI.** Reconfigurable Intelligent Surface-Aided Wireless Communications: Adaptive Beamforming and Experimental Validations. *IEEE Access,* 2021, vol. 9, 147442-147457
- **E. BJÖRNSON.** Reconfigurable Intelligent Surfaces: A signal processing perspective with wireless applications. *IEEE Signal Processing Magazine,* March 2022, vol. 39 (2), 135-158